# EUROPEAN PATENT APPLICATION

(11) **EP 1 450 461 A2**
(43) Date of publication of application: **25.08.2004**
(21) Application number: 04003068.6
(22) Date of filing: 11.02.2004
(51) Int. Cl.: H02J 7/00

(54) **Power supply detection circuit**

(30) Priority: 19.02.2003 JP 2003040621
(71) Applicant: Orion Electric Company, Ltd., Takefu-shi, Fukui-ken (JP)
(72) Inventor: Miura, Jun, Takefu-shi Fukui-ken (JP)
(74) Representative: Kirschner, Klaus Dieter, Dipl.-Phys.

(57) **Abstract**

This invention detects an operating voltage output from a power supply circuit of an electric device using a control microcomputer, and makes a power supply detection circuit protecting the control microcomputer from an overvoltage and, a reduced voltage, compact. The power supply detection circuit includes a first circuit, a second circuit, and a third circuit. The first circuit includes a first switching element. The second circuit includes a first voltage detection element and a second switching element. The third circuit includes a second voltage detection element and a third switching element. If a proper voltage is output from a voltage output terminal, the third circuit is made continuous, thereby turning on the first switching element and inputting a proper voltage signal to a power fail terminal of the control microcomputer. If an overvoltage is output, the second circuit is made continuous and the power fail terminal is set at a ground potential, thereby protecting the control microcomputer. If a reduced voltage is output from the terminal, none of the first circuit, the second circuit, and third circuit are made continuous, whereby the control microcomputer detects that the reduced voltage is output.

## Description

The present invention relates to a power supply detection circuit for detecting a voltage output from a power supply circuit included in an electric device.

An electric device is normally provided with a power supply circuit and designed to generate a predetermined voltage for actuating the electric device by the power supply circuit. The electric device is often provided with a control microcomputer for controlling operations of the electric device.

In some electric devices including the control microcomputers, respectively, each control microcomputer detects the voltage output from the power supply circuit and controls the power supply circuit to be stopped if the output of the power supply circuit is inappropriate.

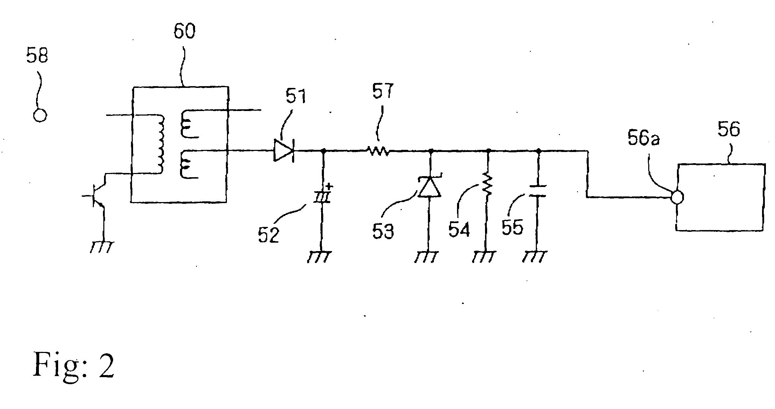

Fig. 2 is a circuit diagram which illustrates one example of a power supply detection circuit that inputs the voltage output from the power supply circuit to the control microcomputer. In Fig. 2, an operating voltage output terminal 58 outputs the predetermined voltage for actuating the electric device.

An operating voltage is input to this operating voltage output terminal 58 from the power supply circuit which is not shown in Fig. 2. Namely, the power supply circuit generates the predetermined operating voltage for actuating each unit included in the electric device, and outputs the generated operating voltage to the operating voltage output terminal 58.

The power supply detection circuit shown in Fig. 2 is provided to input the voltage output from the operating voltage output terminal 58 to the control microcomputer 56. In the power supply detection circuit shown in Fig. 2, a DC voltage output from the operating voltage output terminal 58 is output from a transformer 60, and rectified by rectifier circuits 51 and 52. The voltage is adjusted by resistances 54 and 57, and input to a power fail terminal 56a of the control microcomputer 56.

Further, in the power supply detection circuit shown in Fig. 2, the voltage is adjusted by a Zener diode 53 and the resistances 54 and 57 so as not to input voltage equal to or higher than a certain voltage to the power fail terminal 56a.

The power fail terminal 56a of the control microcomputer 56 is provided to detect an operation of the power supply circuit based on the voltage output from the operating voltage output terminal 58. The control microcomputer 56 detects a status of the operation of the power supply circuit based on the voltage input to the power fail terminal 56a.

The conventional power supply detection circuit includes a protection circuit, not shown in Fig. 2, on a primary side of the transformer 60 in order to protect the microcomputer 56 and the transformer 60 from an overvoltage and a reduced voltage. The protection circuit is provided as a separate circuit from the circuit that inputs the voltage to the power fail terminal 56a of the control microcomputer 56.

As can be seen, in the conventional power supply detection circuit, the protection circuit against the overvoltage and the reduced voltage is provided separately from the circuit that detects the operating voltage output from the power supply circuit using the control microcomputer.

Consequently, the overall conventional power supply detection circuit is disadvantageously made large in size and a cost for components of the conventional power supply detection circuit is disadvantageously pushed up.

It is, therefore, an object of the present invention to provide a power supply detection circuit capable of making the configuration of the circuit compacter and reducing a cost.

This object is achieved by the power supply detection circuit of claim 1.

According to the power supply detection circuit of the present invention, the control microcomputer can detect whether the operating voltage output from the power supply circuit is a proper voltage or an overvoltage or a reduced voltage. In addition, the control microcomputer can control the electric device according to a detected operating state of the power supply circuit.

According to the present invention, the power supply detection circuit can be constituted without employing a relatively large circuit component such as a transformer. It is thereby possible to constitute the power supply detection circuit compacter, and to reduce the manufacturing cost of the power supply detection circuit.

According the preferred embodiment of claim 2, it is thereby possible to constitute each of the switching elements by the transistor and to constitute each of the voltage detection element by the Zener diode. Accordingly, the power supply detection circuit is constructed by transistors and Zener diodes that are spread as circuit elements. This is more preferable because the power supply detection circuit can be constituted compacter and the manufacturing cost can be further reduced.

According the preferred embodiment of claim 3, it is possible to prevent the voltage transmitted to the other end of the first circuit from exceeding the constant voltage, and to protect the power fail terminal of the control microcomputer from the input of the overvoltage.

According the preferred embodiment of claim 4, it is thereby possible to constitute the constant voltage maintaining circuit using voltage-current characteristics of the third Zener diode. Accordingly, the constant voltage maintaining circuit can be made compacter and the cost of the power supply detection circuit can be further reduced.

Fig. 1 is a circuit diagram of a power supply detection circuit in one embodiment of the present invention; and

Fig. 2 is a circuit diagram of a conventional power supply detection circuit.

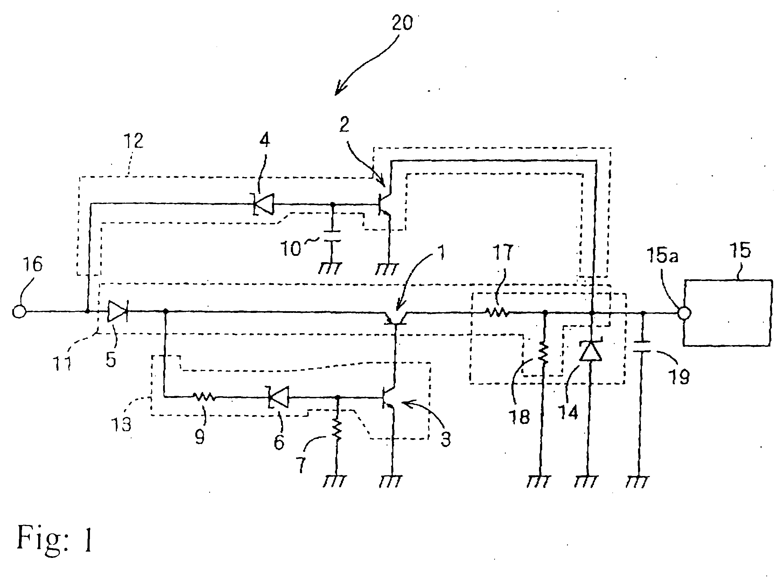

One embodiment of the present invention will be described hereinafter with reference to Fig. 1. Fig. 1 is a circuit diagram of a power supply detection circuit 20 in one embodiment of the present invention. A power supply detection circuit 20 shown in Fig. 1 is employed while being incorporated into an electric device controlled by a control microcomputer. The power supply detection circuit 20 is provided to detect an output of a power supply circuit that generates an operating voltage for actuating this electric device.

The power supply detection circuit 20 has one end connected to an operating voltage output terminal 16 and the other end connected to a power fail terminal 15a of the control microcomputer 15. The operating voltage output terminal 16 is a specific one of a plurality of operating voltage output terminals provided in the electric device.

Each of the operating voltage output terminals inputs a predetermined operating voltage adjusted by a power supply circuit in the electric device. The operating voltage adjusted by this power supply circuit is supplied to each unit included in the electric device, whereby the unit operates. An operating voltage that is a DC voltage at a positive potential generated by the power supply circuit, not shown, is supplied to the operating voltage output terminal 16.

The control microcomputer 15, which is provided in the electric device, controls the operation of the electric device. The power fail terminal 15a of the control microcomputer 15 is an input terminal for monitoring an output of the power supply circuit and detecting power failure. A voltage signal based on an output of the operating voltage output terminal 16 is transmitted to the power fail terminal 15a by the power supply detection circuit 20.

As shown in Fig. 1, the power supply detection circuit 20 includes a first circuit 11, a second circuit 12, and a third circuit 13. The first circuit 11 has one end connected to the operating voltage output terminal 16 and the other end connected to the power fail terminal 15a.

The first circuit 11 is provided with a first transistor 1. The first transistor 1 corresponds to a first switching element. In the embodiment shown in Fig. 1, the first transistor 1 is comprised of a PNP transistor. An emitter terminal of the first transistor 1 is connected to the operating voltage output terminal 16 through a diode 5.

A collector terminal of the first transistor 1 is connected to the power fail terminal 15a through a resistance 17. A base terminal of the first transistor 1 is connected to a third transistor 3 to be described later.

An anode of the diode 5 is connected to the operating voltage output terminal 16 and a cathode thereof is connected to the emitter terminal of the first transistor 1. If a negative voltage is output to the operating voltage output terminal 16, the diode 5 can prevent this negative voltage from being transmitted to the first circuit 11.

Resistances 17 and 18 are connected to the first circuit 11. The resistance 17 has one terminal connected to the collector terminal of the first transistor 1, and the other terminal connected to the other terminal of the first circuit 11 that is connected to the power fail terminal 15a.

The resistance 18 has one terminal connected to the other terminal of the resistance 17 in the first circuit 11 to be connected to the other end of the first circuit 11, and the other terminal connected to a ground.

The resistances 17 and 18 can adjust a magnitude of a voltage signal transmitted from the transistor 1 to the power fail terminal 15a, relative to the voltage output from the operating voltage output terminal 16.

A third Zener diode 14 is provided between the other end of the first circuit 11 and the ground. An anode of the third Zener diode 14 is connected to the ground. A cathode of the third Zener diode 14 is connected to the other end of the first circuit, and is connected to the power fail terminal 15a and a collector terminal of the second transistor 2.

In the third Zener diode 14, a voltage V3, which is slightly higher than a voltage corresponding to a proper voltage V0 output from the operating voltage output terminal 16 and which falls within a range within which the voltage is not excessive for the power fail terminal 15a, is used as a reverse withstand voltage applied from the cathode to the anode of the third Zener diode 14.

If a voltage exceeding the reverse withstand voltage V3 is applied under certain operating conditions, the third Zener diode 14 functions as a constant voltage maintaining element that prevents passage of part of the voltage exceeding the voltage V3 and that maintains the voltage applied to be equal to or lower than a constant voltage up to the voltage V3.

The third Zener diode 14 and the resistances 17 and 18 constitute a constant voltage maintaining circuit. This constant voltage maintaining circuit functions as follows. If a current conducted to the first circuit 11 is regulated to be equal to or lower than a certain current by the resistances 17 and 18, a voltage exceeding the reverse withstand voltage V1 is prevented from being passed toward the power fail terminal 15a by the third Zener diode 14.

By so constituting, even if the voltage output from the operating voltage output terminal 16 is overvoltage exceeding the proper voltage V0, the constant voltage up to the withstand voltage V3 of the diode 14 is input to the power fail terminal 15a.

The constant voltage maintaining circuit can thus input the constant voltage to the power fail terminal 15a against the overvoltage, and protect the power fail terminal 15a against the overvoltage.

Furthermore, the power supply detection circuit 20 is provided with a capacitor 19 at a position in front of the power fail terminal 15a. The capacitor 19 has one terminal connected to the power fail terminal 15a and the other end of the first circuit 11, and the other terminal connected to the ground. When the voltage signal transmitted over the first circuit 11 is input to the power fail terminal 15a, the capacitor 19 can make the voltage signal stable.

The second circuit 12 has one end connected to the operating voltage output terminal 16, and the other end connected to the power fail terminal 15a of the control microcomputer 15. The other end of the second circuit 12 is also connected to the other end of the first circuit 11.

The second circuit 12 includes a first Zener diode 4 and a second transistor 2. A cathode of the first Zener diode 4 is connected to the operating voltage output terminal 16, and an anode thereof is connected to the second transistor 2. A base terminal of the second transistor 2 is connected to the anode of the first Zener diode 4.

A collector terminal of the second transistor 2 is connected to the power fail terminal 15a. An emitter terminal of the second transistor 2 is connected to the ground.

A capacitor 10 is connected between the base terminal of the second transistor 2 and the ground. The capacitor 10 is provided to stabilize a base potential of the second transistor 2.

In this second circuit 12, a voltage of the first Zener diode 14 is selected as follows. A voltage V1, which is slightly higher than the voltage corresponding to the proper voltage V0 output from the operating voltage output terminal 16, is selected as a reverse withstand voltage applied from the cathode to the anode of the first Zener diode 4.

By so selecting, if an overvoltage exceeding the voltage V1 is applied from the operating voltage output terminal 16, a continuity of the cathode to the anode of the first Zener diode 4 is established, thereby detecting the overvoltage.

The first Zener diode 4 corresponds to a first voltage detection element. The second transistor 2 corresponds to a second switching element.

The third circuit 13 includes a second Zener diode 6 and a third transistor 3. A cathode of the second Zener diode 6 is connected to the cathode of the diode 5 through a resistance 9. As a result, the voltage output from the operating voltage output terminal 16 and passing through the diode 5 is applied to the second Zener diode 6.

The cathode of the second Zener diode 6 is also connected to the emitter terminal of the first transistor 1 through the resistance 9. An anode of the second Zener diode 6 is connected to the third transistor 3.

A collector terminal of the third transistor 3 is connected to the base terminal of the first transistor 1, and an emitter terminal thereof is connected to the ground. A base terminal of the third transistor 3 is connected to the anode of the second Zener diode.

A resistance 7 is provided between the base terminal of the third transistor 3 and the ground. This resistance 7 can stabilize a base potential input to the base of the third transistor 3.

In this third circuit 13, a voltage of the second Zener diode 6 is selected as follows. A voltage V2, which is slightly lower than the proper voltage V0 output from the operating voltage output terminal 16, is selected as a reverse withstand voltage applied from the cathode to the anode of the second Zener diode 6.

By so selecting, if a proper voltage or an overvoltage exceeding the voltage V2 is applied from the operating voltage output terminal 16, a continuity of the cathode to the anode of the second Zener diode 6 is established. If a reduced voltage lower than the voltage V2 is output from the operating voltage output terminal 16, the continuity of the cathode to the anode of the second Zener diode 6 is not established.

Thus, the power supply detection circuit 20 detects that the proper voltage or the overvoltage is output from the operating voltage output terminal 16 and that the reduced voltage is output from the operating voltage output terminal 16.

The second Zener diode 6 corresponds to a second voltage detection element. The third transistor 3 corresponds to a third switching element.

Examples of the operation of the electric device provided with the power supply detection circuit 20 described above will next be described. An example in which the proper voltage V0 is output from the operating voltage output terminal 16 will first be described.

If the proper voltage V0 is output from the operating voltage output terminal 16, this voltage V0 is applied to the first transistor 1 of the first circuit 11 and the second Zener diode 6 of the third circuit 13.

The second Zener diode 6 is made continuous in a reverse direction, and the voltage that makes the second Zener diode 6 continuous is input from the second Zener diode 6 to the base terminal of the third transistor 3, thereby turning on the third transistor 3. Accordingly, the first transistor 1 is turned on.

By thus turning on the first transistor 1, the voltage signal based on the voltage of the operating voltage output terminal 16 is input to the power fail terminal 15a from the first circuit 11.

If the voltage signal that indicates an operating voltage in a proper range is input to the power fail terminal 15a, the control microcomputer 15 determines that the power supply circuit properly operates.

An example in which the overvoltage is output from the operating voltage output terminal 16 will be described. If the overvoltage is output from the operating voltage output terminal 16, the overvoltage is applied to the first transistor 1 of the first circuit 11, the first Zener diode 4 of the second circuit 12, and the second Zener diode 6 of the third circuit 13.

As a result, the first Zener diode 4 is made continuous in a reverse direction, and the voltage that makes the first zener diode 4 continuous is applied from the first Zener diode 4 to the base terminal of the second transistor 2. Further, the second Zener diode 6 is made continuous in a reverse direction, and the voltage that makes the second zener diode 6 continuous is applied from the second Zener diode 6 to the base terminal of the third transistor 3.

The first transistor 1 and the third transistor 3 are thereby turned on, and the second transistor is turned on, accordingly.

By thus turning on the second transistor 2, the power fail terminal 15a of the control microcomputer 15 is set at a ground potential by the second transistor 2. In response to the input of the ground potential, the control microcomputer 15 determines that an abnormality occurs to the power supply circuit. The control microcomputer 15 controls the power supply circuit to be stopped.

If the overvoltage is output from the operating voltage output terminal 16, the overvoltage may be possibly transmitted to the first circuit 11 before the second transistor 2 is turned on. If there is such a probability, then the third Zener diode 14 prevents the voltage exceeding the withstand voltage V3 of the third Zener diode 14 from being passed and the voltage input to the power fail terminal 15 is maintained to be equal to or lower than V3.

This is more preferably for the following reasons. It is possible to ensure preventing the overvoltage from being input to the power fail terminal 15a, and to thereby ensure protecting the control microcomputer 15 from the overvoltage.

An instance in which the reduced voltage is output from the operating voltage output terminal 16 will be described. If the reduced voltage is output from the operating voltage output terminal 16, neither the first Zener diode 4 nor the second Zener diode 6 are made continuous. As a result, none of the first transistor 1, the second transistor 2, and the third transistor 3 are turned on.

Consequently, there is no voltage input from the first circuit 11 to the power fail terminal 15a. As a result, the control microcomputer 15 determines that the power supply circuit does not operate normally and controls the power supply circuit to be stopped.

According to the power supply detection circuit 20 described so far, if the overvoltage is output from the power supply circuit included in the electric device, the overvoltage is introduced to the ground, thereby making it possible to protect the control microcomputer 15.

According to the power supply detection circuit 20, if the power supply circuit outputs the overvoltage or the reduced voltage, the control microcomputer 15 detects that the power supply circuit does not operate normally and controls the power supply circuit to be stopped.

Further, according to the power supply detection circuit 20, a power failure detection circuit for detecting an output of the power supply circuit using the control microcomputer 15 and a protection circuit for protecting the control microcomputer 15 from the overvoltage and the reduced voltage are provided integrally, and the power failure detection circuit and the protection circuit can be constituted compact. In addition, a manufacturing cost of the power supply detection circuit 20 can be reduced.

If the electric device including the power supply detection circuit 20 is a device that outputs a DV operating voltage from the power supply circuit, the power supply detection circuit 20 can be constituted without providing a transformer. It is thereby possible to make the power supply detection circuit 20 compact.

In the embodiment stated above, the instance in which the voltage detection elements are comprised of the Zener diodes 4 and 6, respectively. Alternatively, circuit elements other than the Zener diodes can be used as the voltage detection elements.

Namely, it suffices that each voltage detection element can detect whether the voltage output from the operating voltage output terminal is a proper operating voltage or an overvoltage or a reduced voltage and can output a signal for controlling the second switching element 2 and the third switching element 3 to be turned and or off based on the detection of the voltage.

Furthermore, in the embodiment stated so far, the switching elements are comprised of the transistors 1, 2, and 3, respectively. However, the switching elements are not limited to the transistors but may be other semiconductor switching elements.

Namely, each switching element can be comprised of a semiconductor switching element that inputs a signal for controlling a continuous state of the voltage detection element and that is thereby controlled to be turned on and off.

As stated so far, according to the present invention, since the circuit that detects the operating voltage output from the power supply circuit of the electric device using the control microcomputer and the circuit that protects the control microcomputer from the overvoltage and the reduced voltage can be provided integrally with each other in the power supply detection circuit, it is advantageously possible to make the power supply detection circuit compact. It is also advantageously possible to reduce the manufacturing cost of the power supply detection circuit.

## Claims

1. A power supply detection circuit provided in an electric device comprising therein a power supply circuit; an operating voltage output terminal outputting an operating voltage input from the power supply circuit; and a control microcomputer, the power supply detection circuit comprising:
a first circuit provided between the operating voltage output terminal and a power fail terminal for monitoring the operating voltage of the control microcomputer, having one end connected to the operating voltage output terminal and another end connected to the power fail terminal of the control microcomputer, a first switching element controlled to be turned on and off being connected between the one end and the another end;
a second circuit comprising: a first voltage detection element inputting a voltage output from the operating voltage output terminal, and detecting whether the input voltage is an overvoltage; and a second switching element being connected between the power fail terminal and a ground, the second switching element is connected between the power fail terminal and the ground so as to be controlled to be turned on and off in accordance with detection of the overvoltage by the first voltage detection element and turning on and off of the first switching element; and
a third circuit comprising: a second voltage detection element inputting the voltage output from the operating voltage output terminal, and detecting whether the input voltage is a proper voltage or an overvoltage or a reduced voltage; and a third switching element controlled to be turned on and off in accordance with detection of the voltage by the second voltage detection element, and controlling the first switching element to be turned on and off, wherein
if a proper operating voltage is output from the operating voltage output terminal, then the second voltage detection element turns on the third switching element to thereby turn on the first switching element, and the first voltage detection element turns off the second switching element, whereby the first switching element inputs a voltage signal based on the proper operating voltage to the power fail terminal of the control microcomputer,
if the overvoltage is output from the operating voltage output terminal, then the second voltage detection element turns on the third switching element to thereby turn on the first switching element, and the first voltage detection element detects the overvoltage to thereby turn on the second switching element, whereby the power fail terminal of the control microcomputer is set at a ground potential, and
if the reduced voltage is output from the operating voltage output terminal, then the second voltage detection element fails to turn on the third switching element to thereby fail to turn on the first switching element, whereby the reduced voltage is prevented from being input to the power fail terminal.

2. The power supply detection circuit according to claim 1, wherein
the first switching element is a first transistor comprised of a PNP transistor, the second switching element is a second transistor comprised of an NPN transistor, and the third switching element is a third transistor comprised of an NPN transistor,
the first voltage detection element is a first Zener diode having a reverse withstand voltage V1 slightly higher than the proper operating voltage V0, and the second voltage detection element is a second Zener diode having a reverse withstand voltage V2 slightly lower than the proper operating voltage V0,
the first transistor is connected so that an emitter terminal is on one end side of a first circuit and so that a collector terminal is on another end side of the first circuit,
a cathode of the first Zener diode is connected to the operating voltage output terminal, a collector terminal of the second transistor is connected to the power fail terminal, an emitter terminal of the second transistor is connected to the ground, and a base terminal of the second transistor is connected to an anode of the first Zener diode, and
a cathode of the second Zener diode is connected to the operating voltage output terminal, a base terminal of the third transistor is connected to an anode of the second Zener diode, a collector terminal of the third transistor is connected to a base terminal of the first transistor, and an emitter terminal of the third transistor is connected to the ground.

3. The power supply detection circuit according to claim 1 or 2, comprising a constant voltage maintaining circuit, provided on the another end of the first circuit connected to the power fail terminal, for setting the voltage input to the power fail terminal to be equal to or lower than a constant voltage.

4. The power supply detection circuit according to claim 3, wherein
the constant voltage maintaining circuit comprises a third Zener diode having a reverse withstand voltage V3 slightly higher than the voltage corresponding to the proper operating voltage V0, having a cathode connected to another end of the first circuit and an anode connected to the ground, and
if the voltage exceeding the voltage V3 is applied to the third Zener diode in a reverse direction, the third Zener diode, a resistance connected to the first circuit in series, and a resistance connected to the third Zener diode in parallel maintain the another end of the first circuit at the voltage V3.
